# EUROPEAN PATENT SPECIFICATION

(11) **EP 3 377 196 B1**
(45) Date of publication and mention of the grant of the patent: **15.04.2026**
(21) Application number: 16778139.2
(22) Date of filing: 12.09.2016
(51) Int. Cl.: B01D 53/26, C10L 3/10, E21B 43/36

(54) **COMPACT SUBSEA DEHYDRATION**
KOMPAKTE UNTERSEEISCHE DEHYDRIERUNG
DÉSHYDRATATION SOUS-MARINE COMPACTE

(30) Priority: 19.11.2015 US 201562257495 P
(43) Date of publication of application: 26.09.2018
(73) Proprietor: ExxonMobil Technology and Engineering Company, Spring, TX 77389 (US)
(72) Inventor: YEH, Norman, K., Shenandoah, TX 77381 (US); CULLINANE, J., Tim, Montgomery, TX 77316 (US); FOWLER, Tracy, A., Magnolia, TX 77354 (US); RAMKUMAR, Shwetha, Cypress, TX 77433 (US); SHATTO, Donald, P., Houston, TX 77005 (US)
(74) Representative: ExxonMobil Petroleum & Chemical BV
(86) International application number: PCT/US2016/051212
(87) International publication number: WO 2017/087056

(56) References cited:
- EP-A1- 1 438 484
- WO-A1-2013/041545
- US-A1- 2008 190 291
- US-A1- 2015 013 539

## Description

### FIELD

The present techniques provide for the separation of water from a natural gas stream. More specifically, the present techniques provide for the dehydration using a series of compact co-current contacting systems located in a subsea system.

### BACKGROUND

This section is intended to introduce various aspects of the art, which can be associated with exemplary examples of the present techniques. This description is believed to assist in providing a framework to facilitate a better understanding of particular aspects of the present techniques.

During production of hydrocarbon fluids from underground reservoirs, the produced fluids, natural gas and oil, may also include water, both as a free liquid phase and as water vapor. When production wells are located offshore in deep water, it can be advantageous to complete the wells subsea and produce the well stream into a flow line. The well stream can be transported via pipeline to shore, tied back to a host facility on the topsides, or processed subsea. However, the presence of water can result in hydrate formation, corrosion, and scaling in the flow lines, resulting in blockages, reduced production, or integrity issues. Further, the water vapor may condense along the pipeline or flow line because of the ambient temperature. In natural gas production, the condensation of liquid may also increase the pressure drop because of the multiphase nature of the flow.

In recent years, significant efforts have gone into developing subsea separation systems to physically separate the natural gas, oil, water, and sand that can be found in hydrocarbon production streams, for example, multiline pipe separators such as harp separators. These subsea separation systems can be designed to produce single phase gas and oil streams that can be compressed or pumped, respectively. The water stream can be injected into a disposal well, discharged, or sent to a topsides facility for further processing.

A subsea separation system is for example known from document EP1428484 A1.

However, physical separation alone only removes free liquid water from the hydrocarbon streams. Water in the vapor phase exits the subsea separation system with the natural gas, and is likely to condense if the ambient temperature of the sea is lower than the dew point of the gas. Further, the water may form hydrates if the temperature is sufficiently low in the line, such as along the walls.

Chemicals, such as methanol or glycol, are injected into the flow in order to prevent or slow the formation of hydrates. Similarly, chemical corrosion inhibitors are also often injected into the flow. These chemicals add to operating costs for the hydrocarbon production. To address corrosion concerns, the pipeline is often designed to be cleaned and inspected by periodic "pigging". In this case, the pipeline design becomes more complex and costly due to facilities for launching the pig, catching the pig, and the like.

Produced natural gas can be dehydrated to remove the water vapor down to a specified dew point so that condensation will not occur at the expected temperature. The conventional approaches to dehydrating gas in onshore or topsides facilities are to contact the natural gas stream with a liquid solvent or solid desiccant with an affinity for the water. This contacting usually takes place in a pressure vessel, such as a tower for absorption into a liquid solvent or vessels that have hold solid adsorbent. The water is removed by the solvent or desiccant, which is then regenerated and reused. However the equipment necessary to contact the saturated gas with the solvent/desiccant are often relatively large and not well suited for subsea applications, where external pressures are high and the equipment is to be designed to be modular and retrievable.

For example, counter-current contactors used for dehydrating natural gas streams tend to be large and very heavy. Further, the diameter of these systems makes constructing a system that can withstand the pressures of subsea placement impractical. This creates particular difficulty in offshore and subsea oil and gas production applications, where smaller equipment is desirable.

### SUMMARY

A subsea system for dehydrating a natural gas stream is also described herein. The subsea system includes a lean solvent feed system, including a line from a topsides facility, wherein the line is configured to divide a lean solvent stream to feed lean solvent to each of a number of co-current contacting systems in parallel. The co-current contacting systems are placed in series along the wet natural gas stream, wherein each of the co-current contacting systems is configured to contact the lean solvent stream with the wet natural gas stream to absorb at least a portion of water from the natural gas stream to form a dry natural gas stream. A rich solvent return system includes a line to combine rich solvent from each of the number of co-current contacting systems and return a rich solvent stream to the topsides facility.

A method for a subsea separation of water from a natural gas stream is also described herein. The method includes providing a lean solvent stream to a subsea processing unit. A portion of the lean solvent stream is fed to each of a number of co-current contacting systems. A wet natural gas stream is sequentially contacted with the lean solvent stream in each of the co-current contacting systems to generate a natural gas stream that is at least partially dehydrated and a portion of a rich solvent stream including water. The portions of the rich solvent stream are combined and the rich solvent stream is returned to a topsides facility for regeneration.

A system for dehydrating a wet natural gas stream as defined in claim 1 is described. The system includes a lean solvent line to provide a lean solvent stream to a subsea dehydration system. The subsea dehydration system includes a number of co-current contacting systems coupled in series along a natural gas stream, wherein each co-current contacting systems is configured to contact the wet natural gas stream with a portion of the lean solvent stream to generate a natural gas stream that is at least partially dehydrated and a rich solvent stream including the water. A rich solvent line is configured to combine the rich solvent streams into a single rich solvent stream and return the single rich solvent stream to a topsides facility. A regeneration system at the topsides facility is configured to regenerate the lean solvent stream.

### DESCRIPTION OF THE DRAWINGS

The advantages of the present techniques are better understood by referring to the following detailed description and the attached drawings, in which:
**Fig. 1** is a block diagram of a gas dehydration System (not according to the invention);
**Fig. 2** is a generalized block diagram of a subsea system for dehydrating a natural gas stream that includes a co-current flow scheme;
**Fig. 3** is a schematic of a co-current contacting system;
**Fig. 4** is a process flow diagram of a subsea separation system including a number of co-current contacting systems;
**Fig. 5** is a process flow diagram of a subsea separation system including a rich solvent return pump on the rich solvent stream;
**Fig. 6** is a process flow diagram of a subsea separation system including a lift gas stream;
**Fig. 7A** is a front view of a contacting device;
**Fig. 7B** is a side perspective view of the contacting device;
**Fig. 7C** is a cross-sectional side perspective view of the contacting device;
**Fig. 7D** is a another cross-sectional side perspective view of the contacting device; and
**Fig. 8** is a process flow diagram of a method for subsea dehydration of a natural gas stream using co-current contacting systems.

### DETAILED DESCRIPTION

In the following detailed description section, non-limiting examples of the present techniques are described. However, to the extent that the following description is specific to a particular example or a particular use of the present techniques, this is intended to be for exemplary purposes only and simply provides a description of the exemplary examples.

At the outset, for ease of reference, certain terms used in this application and their meanings as used in this context are set forth.

"Acid gas" refers to any gas that produces an acidic solution when dissolved in water. Non-limiting examples of acid gases include hydrogen sulfide (H₂S), carbon dioxide (CO₂), sulfur dioxide (SO₂), carbon disulfide (CS₂), carbonyl sulfide (COS), mercaptans, or mixtures thereof.

"Co-current contactor" refers to a vessel that receives a gas stream and a separate solvent stream in such a manner that the gas stream and the solvent stream contact one another while flowing in generally the same direction. Non-limiting examples include an eductor and a coalescer, or a static mixer plus deliquidizer.

The term "co-currently" refers to the internal arrangement of process streams within a unit operation that can be divided into several sub-sections by which the process streams flow in the same direction.

As used herein, a "column" is a separation vessel in which a counter-current flow is used to isolate materials on the basis of differing properties. In an absorbent column, a liquid solvent is injected into the top, while a mixture of gases to be separated is flowed into the bottom. As the gases flow upwards through the falling stream of absorbent, one gas species is preferentially absorbed, lowering its concentration in the vapor stream exiting the top of the column, while rich liquid is withdrawn from the bottom.

"Dehydrated natural gas stream" or "dry natural gas stream" refers to a natural gas stream that has undergone a dehydration process. Typically the dehydrated gas stream has a water content of less than 50 ppm, and preferably less than 7 ppm. Any suitable process for dehydrating the natural gas stream can be used. Typical examples of suitable dehydration processes include, but are not limited to dehydration using glycol or methanol.

As used herein, the term "dehydration" refers to the pre-treatment of a raw feed gas stream to partially or completely remove water and, optionally, some heavy hydrocarbons. This can be accomplished by means of a pre-cooling cycle, against an external cooling loop or a cold internal process stream, for example. Water may also be removed by means of pre-treatment with molecular sieves, e.g. zeolites, or silica gel or alumina oxide or other drying agents. Water may also be removed by means of washing with glycol, monoethylene glycol (MEG), diethylene glycol (DEG), triethylene glycol (TEG), or glycerol, as described herein. The amount of water in the gas feed stream is suitably less than 1 volume percent (vol %), preferably less than 0.1 vol %, more preferably less than 0.01 vol %.

The term "distillation" (or "fractionation") refers to the process of physically separating chemical components into a vapor phase and a liquid phase based on differences in the components' boiling points and vapor pressures at specified temperatures and pressures. Distillation is typically performed in a "distillation column," which includes a series of vertically spaced plates. A feed stream enters the distillation column at a mid-point, dividing the distillation column into two sections. The top section can be referred to as the rectification section, and the bottom section can be referred to as the stripping section. Condensation and vaporization occur on each plate, causing lower boiling point components to rise to the top of the distillation column and higher boiling point components to fall to the bottom. A reboiler is located at the base of the distillation column to add thermal energy. The "bottoms" product is removed from the base of the distillation column. A condenser is located at the top of the distillation column to condense the product emanating from the top of the distillation column, which is called the distillate. A reflux pump is used to maintain flow in the rectification section of the distillation column by pumping a portion of the distillate back into the distillation column.

As used herein, the term "facility" refers to a system that receives one or more streams of fluids from subsurface facilities, such as a rich solvent stream, among others, and outputs one or more separate streams of fluids to the subsurface facilities, such as a lean solvent stream, among others. Facility is used as a general term to encompass oil and gas field gathering systems, processing platform systems, and well platform systems.

The term "topsides facility" refers to a facility that is above a sea surface, such as a platform, a barge, an FPSO (floating production, storage, and offloading vessel), and the like. The topsides facility can be a shore installation, for example, placed near an offshore gas or gas and oil field.

The term "gas" is used interchangeably with "vapor," and is defined as a substance or mixture of substances in the gaseous state as distinguished from the liquid or solid state. Likewise, the term "liquid" means a substance or mixture of substances in the liquid state as distinguished from the gas or solid state.

A "hydrocarbon" is an organic compound that primarily includes the elements hydrogen and carbon, although nitrogen, sulfur, oxygen, metals, or any number of other elements can be present in small amounts. As used herein, hydrocarbons generally refer to components found in natural gas, oil, or chemical processing facilities.

With respect to fluid processing equipment, the term "in series" means that two or more devices are placed along a flow line such that a fluid stream undergoing fluid separation moves from one item of equipment to the next while maintaining flow in a substantially constant downstream direction. Similarly, the term "in line" means that two or more components of a fluid mixing and separating device are connected sequentially or, more preferably, are integrated into a single tubular device. Similarly, the term "in parallel" means that a stream is divided among two or more devices, with a portion of the stream flowing through each of the devices.

The term "liquid solvent" refers to a fluid in substantially liquid phase that preferentially absorbs one component over another. For example, a liquid solvent may preferentially absorb water, such as a glycol, thereby removing at least a portion of the water from a gas stream.

The term "stream" indicates a material that is flowing from a first point, such as a source, to a second point, such as a device processing the stream. The stream may include any phase or material, but is generally a gas or liquid. The stream will be conveyed in a line or pipe, and used here, reference to the line or pipe also refers to the stream the line is carrying, and vice versa.

"Natural gas" refers to a multi-component gas obtained from a crude oil well or from a subterranean gas-bearing formation. The composition and pressure of natural gas can vary significantly. A typical natural gas stream contains methane (CH₄) as a major component, i.e., greater than 50 mol % of the natural gas stream is methane. The natural gas stream can also contain ethane (C₂H₆), higher molecular weight hydrocarbons (e.g., C₃-C₂₀ hydrocarbons), one or more acid gases (e.g., CO₂ or H₂S), or any combinations thereof. The natural gas can also contain minor amounts of contaminants such as water, nitrogen, iron sulfide, wax, crude oil, or any combinations thereof. The natural gas stream can be substantially purified, so as to remove compounds that may act as poisons.

"Solvent" refers to a substance capable at least in part of dissolving or dispersing one or more other substances, such as to provide or form a solution. The solvent can be polar, nonpolar, neutral, protic, aprotic, or the like. The solvent may include any suitable element, molecule, or compound, such as methanol, ethanol, propanol, glycols, ethers, ketones, other alcohols, amines, salt solutions, ionic liquids, or the like. The solvent may include physical solvents, chemical solvents, or the like. The solvent may operate by any suitable mechanism, such as physical absorption, chemical absorption, or the like.

"Substantial" when used in reference to a quantity or amount of a material, or a specific characteristic thereof, refers to an amount that is sufficient to provide an effect that the material or characteristic was intended to provide. The exact degree of deviation allowable may depend, in some cases, on the specific context.

### Overview

The present techniques provide for the removal of at least a portion of water from a natural gas stream using compact systems that are located on a subsea system, for example, near a well or groups of wells. Removing the water from the natural gas stream may decrease the formation of hydrates as the natural gas stream cools, lowering the chances of hydrate fouling of lines to shore or to a topsides facility. The water is removed from the natural gas stream by contacting the natural gas stream with a solvent stream within a series of co-current contacting systems.

Compact co-current contact separators processing configurations and equipment have been developed to replace a gas-liquid contacting tower for mass transfer and separation. For example, see United States Patent No. 8,899,557 to Cullinane et al. The stages of the co-current contacting systems are composed primarily of inline devices, having smaller diameters than a conventional tower that can be designed to withstand higher internal and external pressures. Further, the inline devices are smaller than conventional pressure vessels, and are thus more suited to modular design/construction, subsea deployment, and to be retrievable. In a dehydration application, two to three co-current contacting systems in series can be used in order to dehydrate gas to meet flow assurance or sales specification requirements.

However, previous configurations used numerous pieces of equipment, such as pumps, controls, for example, to circulate semi-lean solvent from downstream stages to upstream stages. The equipment can be redesigned to enable the deployment of the compact dehydration system subsea. For example, interstage pumps and other equipment can be removed.

The resulting dehydrated natural gas stream is then transported to a surface vessel or sent to an on-shore processing facility. If present, H₂S and CO₂ can be removed from the natural gas in surface processing. The H₂S and CO₂ can be removed by contacting the natural gas with a solvent stream within a second series of co-current contacting systems.

### Systems for Dehydrating Natural Gas

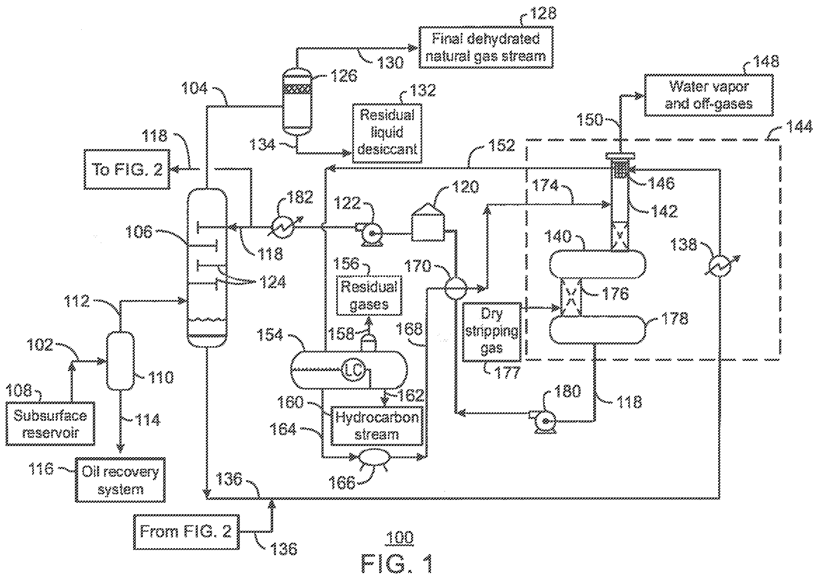

**Fig. 1** is a block diagram of a gas dehydration system **100** (not according to the invention). The gas dehydration system **100** can be used to remove water from a raw natural gas stream **102,** or from a lift gas stream, as described herein, to generate a dehydrated natural gas stream **104.** This can be accomplished by flowing the raw natural gas stream **102** into a contactor **106,** which may remove the water from the raw natural gas stream **102.** The dehydrated natural gas stream **104** may then be flowed out of the contactor **106** as an overhead stream.

The raw natural gas stream **102** can be obtained from a subsurface reservoir **108** via any suitable type of hydrocarbon recovery operation. The raw natural gas stream **102** may include a non-absorbing gas, such as methane. In addition, the raw natural gas stream **102** may include water, in addition to other components, such as nitrogen and acid gases, including H₂S and CO₂. For example, the raw natural gas stream **102** may include about 0 % to 10 % H₂S and about 0 % to 10 % CO₂, along with the hydrocarbon gas. Water concentration in the natural gas depends on the temperature and pressure in the reservoir and will be at saturation levels for natural gas produced in the presence of water. For example, at higher temperatures, the equilibrium water content of the natural gas will be higher than at lower temperatures. Natural gas with H₂S and CO₂ may hold higher concentrations of water.

As shown in **Fig. 1****,** the raw natural gas stream **102** can be flowed into an inlet separator **110** upon entry into the gas dehydration system **100.** When entering the inlet separator **110,** the raw natural gas stream **102** can be under a large amount of pressure. However, the pressure of the raw natural gas stream **102** may vary considerably, depending on the characteristics of the subsurface reservoir **108** from which the gas product is produced. For example, the pressure of the raw natural gas stream **102** may range between atmospheric pressure and several thousand psig (kPa). For natural gas treating applications, the pressure of the raw natural gas stream **102** can be boosted to about 100 psig (689 kPa) or about 500 psig (3447 kPa), or greater, if desired.

The inlet separator **110** may clean the raw natural gas stream **102,** for example, to prevent foaming of liquid solvent during a later acid gas treatment process. This can be accomplished by separating the raw natural gas stream into liquid-phase components and gas-phase components. The liquid-phase components may include heavy hydrocarbons, water, sand, and other impurities such as brine, fracturing fluids, and drilling fluids. Such components can be flowed out of the inlet separator **110** via a bottoms line **114,** and can be sent to an oil recovery system **116** or other type of treater. The gas-phase components may include natural gas and some amount of impurities, such as acid gases and water. Such components can be flowed out of the inlet separator **110** as the overhead natural gas stream **112.**

From the inlet separator **110,** the natural gas stream **112** can be flowed into the contactor **106.** The contactor **106** may use a desiccant or lean solvent stream **118,** such as a liquid glycol stream, to absorb water in the natural gas stream **112.** The lean solvent stream **118** may include various desiccant liquids, such as triethylene glycol, or other glycols and mixtures, among other desiccant liquids. The lean solvent stream **118** can be stored in a lean solvent tank **120.** A high-pressure pump **122** may force the lean solvent stream **118** from the lean solvent tank **120** into the contactor **106** under suitable pressure. For example, the high-pressure pump **122** may boost the pressure of the lean solvent stream **118** to about 1,500 (10,342 kPa) psig or about 2,500 psig (17,237 kPa), depending on the pressure of the raw natural gas stream **102.**

Once inside the contactor **106,** gas within the natural gas stream **112** moves upward through the contactor **106.** Typically, one or more trays **124** or other internals are provided within the contactor **106** to create indirect flow paths for the natural gas stream **112** and to create interfacial area between the gas and liquid phases. At the same time, the liquid from the lean solvent stream **118** moves downward and across the succession of trays **124** in the contactor **106.** The trays **124** aid in the interaction of the natural gas stream **112** with the lean solvent stream **118.**

The contactor **106** operates on the basis of a counter-current flow scheme (not part of the invention). In other words, the natural gas stream **112** is directed through the contactor **106** in one direction, while the lean solvent stream **118** is directed through the contactor **106** in the opposite direction. As the two fluid materials interact, the down-flowing lean solvent stream **118** absorbs water from the up-flowing natural gas stream **112** to produce the dehydrated natural gas stream **104.**

Upon exiting the contactor **106,** the dehydrated natural gas stream **104** can be flowed through an outlet separator **126.** The outlet separator **126,** also referred to as a scrubber, may allow any liquid desiccant carried over from the contactor **106** to fall out of the dehydrated natural gas stream **104.** A final dehydrated natural gas stream **128** can be flowed out of the outlet separator **126** via an overhead line **130.** Any residual liquid desiccant **132** may drop out through a bottoms line **134.**

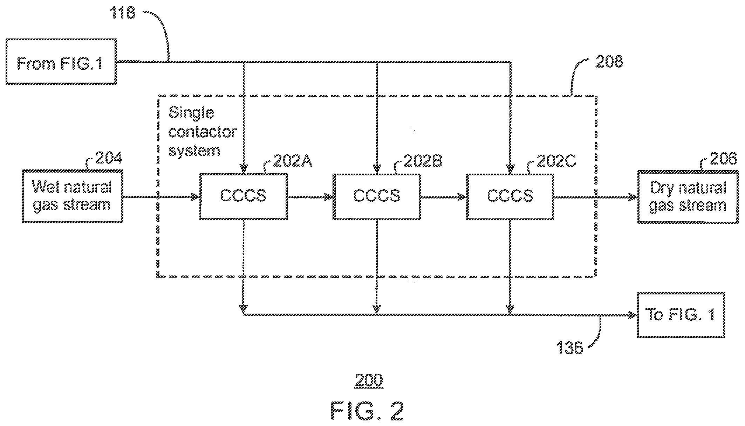

A spent desiccant, or rich solvent stream **136** may flow out of the bottom of the contactor **106.** The rich solvent stream **136** can be a glycol solution that is rich in the absorbed water. The rich solvent stream **136** can be at a relatively high temperature, such as about 90 °F (32 °C) to about 102 °F (39 °C), or higher. The gas dehydration system **100** includes a solvent regeneration system for regenerating the lean solvent stream **118** from the rich solvent stream **136,** as described further herein. The solvent regeneration system encompasses the equipment along the rich solvent stream **136** flowing out of the contactor **106** and from the subsea separation system described with respect to **Fig. 2****,** through the lean solvent stream **118** that is returned to the contactor **106** and the subsea separation system described with respect to **Fig. 2****.**

From the contactor **106,** the rich solvent stream **136** can be heated within a heat exchanger **138** and then flowed into a regenerator **144** (heat exchanger **138** can be separate or part of regenerator **144**). The regenerator **144** can be used to regenerate the lean solvent stream **118** from the rich solvent stream **136.** The regenerator **144** can be a large pressure vessel, or interconnected series of pressure vessels, that operates at about 15 psig (103 kPa) to about 25 psig (172 kPa), for example. The regenerator may include a reboiler **140** that is coupled to a distillation column **142.**

The rich solvent stream **136** can be flowed through a tube bundle **146** in the top of the distillation column **142.** High-temperature water vapor and off-gases **148** being released from the distillation column **142** may preheat the rich solvent stream **136** as it flows through the tube bundle **146,** before the water vapor and off-gases **148** are released via an overhead line **150.**

After being preheated within the distillation column **142,** the rich solvent stream **136** can be released from the tube bundle **146** as a warmed solvent stream **152.** The warmed solvent stream **152** can be flowed into a flash drum **154.** The flash drum **154** may operate at a pressure of about 50 psig (345 kPa) to about 100 psig (689 kPa), for example, for a glycol stream. The flash drum **154** may have internal parts that create a mixing effect or a tortuous flow path for the warmed solvent stream **152.**

Residual gases **156,** such as methane, H₂S, and CO₂, can be flashed out of the flash drum **154** via an overhead line **158.** The residual gases **156** captured in the overhead line **158** can be reduced to an acid gas content of about 100 ppm if contacted with an amine. This concentration of acid gases can be small enough that the residual gases **156** can be used as fuel gas for the gas processing system **100.**

In addition, any entrained heavier hydrocarbons, such as hexane or benzene, within the warmed solvent stream **152** can be separated within the flash drum **154** as a liquid of lesser density than the solvent, e.g., glycol. The resulting hydrocarbon stream **160** can be flowed out of the flash drum **154** via a bottoms line **162.**

Further, as the temperature and pressure of the warmed solvent stream **152** drops within the flash drum **154,** the hydrocarbons within the warmed solvent stream **152** are separated out, producing a partially-purified solvent stream **164.** The partially-purified solvent stream **164** may then be released from the flash drum **154.** The partially-purified solvent stream **164** can be flowed through a filter **166,** such as a mechanical filter or carbon filter, for particle filtration.

The resulting filtered solvent stream **168** may then be flowed through a heat exchanger **170.** Within the heat exchanger **170,** the filtered solvent stream **168** can be heated via heat exchange with the lean solvent stream **118.** The resulting high-temperature solvent stream **174** can be flowed into the distillation column **142** of the regenerator **144.** As the high-temperature solvent stream **174** travels through the distillation column **142,** water vapor and off-gases **148,** such as H₂S and CO₂, can be removed from the high-temperature solvent stream **174.**

The high-temperature solvent stream **174** can be flowed out of the bottom of the distillation column **142** and into the reboiler **140.** The reboiler **140** may boil off residual water vapor and off-gases **148** from the high-temperature solvent stream **174.** The components that are boiled off may travel upward through the distillation column **142** and be removed as the water vapor and off-gases **148** in the overhead line **150.**

The regenerator **144** may also include a separate stripping section **176** fed from the liquid pool in the reboiler **140.** The stripping section **176** may include packing that promotes further distillation, as well as dry stripping gas **177,** e.g., dehydrated natural gas from a subsea system, nitrogen, or other gases. Any remaining impurities, such as water, H₂S, and/or CO₂, boil off and join the water vapor and off-gases **148** in the overhead line **150.** The high-temperature solvent stream **174** may then be flowed into a surge tank **178,** from which it can be released as the lean solvent stream **118.**

The regenerated lean solvent stream **118** can be pumped out of the surge tank **178** via a booster pump **180.** The booster pump **180** may increase the pressure of the lean solvent stream **118** to about 50 psig (345 kPa), for example.

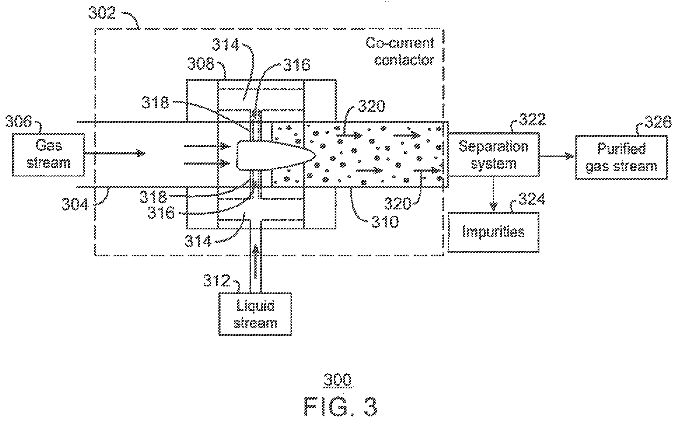

The lean solvent stream **118** may then be flowed through the heat exchanger **170,** in which the lean solvent stream **118** can be partially cooled via heat exchange with the filtered solvent stream **168.** The lean solvent stream **118** can be stored in the lean solvent tank **120.** The high-pressure pump **122** may then force the lean solvent stream **118** from the lean solvent tank **120** through a cooler **182** prior to being returned to the contactor **106.** As described herein, the contactor **106** can be replaced with a series of co-current contacting systems, as described with respect to **Fig. 3****.** The contactor **106** can still be used at the surface, for example, to dry a natural gas stream that has been used as a lift gas.

The cooler **182** may cool the lean solvent stream **118** to ensure that the glycol will absorb water when it is returned to the contactor **106.** For example, the cooler **182** may chill the lean solvent stream **118** to about 100 °F (38 °C) or 125 °F (52 °C).

The process flow diagram of **Fig. 1** is not intended to indicate that the gas dehydration system **100** is to include all of the components shown in **Fig. 1****.** For example, the contactor **106** can be a small unit used to dry a natural gas stream used as a lift gas. The mixed rich solvent and lift gas stream from the subsea separator can come into the inlet separator **110** in place of the raw natural gas stream **102.** The rich solvent stream is removed from the inlet separator **110,** through the bottoms line **114,** and may then be combined into the rich solvent line **136.** The flashed gas is sent to counter current contactor **106** in place of the overhead natural gas stream **112.** Alternatively, the mixed rich solvent and lift gas stream can be separated in the flash drum **154.** Then, the residual gases **156** are sent to the counter current contactor **106** in place of the overhead natural gas stream **112.** The resulting dry gas can be used as a stripping gas stream at the topsides facility.

Further, any number of additional components can be included within the gas dehydration system **100,** depending on the details of the specific implementation. For example, additional heat can be provided to the reboiler **140** to assist in flashing off the water. Further, the gas dehydration system **100** may include any suitable types of heaters, chillers, condensers, liquid pumps, gas compressors, blowers, bypass lines, other types of separation and/or fractionation equipment, valves, switches, controllers, and pressure-measuring devices, temperature-measuring devices, level-measuring devices, or flow-measuring devices, among others.

Counter-current flow schemes not forming part of the present invention, such as the gas dehydration system **100** of **Fig. 1****,** require comparatively low velocities to avoid entrainment of the down-flowing liquid solvent in the raw natural gas stream **102.** Further, relatively long distances are useful for disengagement of the liquid droplets from the raw natural gas stream **102.** Depending on the flow rate of the raw natural gas stream **102,** the contactor **106** can be greater than 15 feet in diameter, and more than 100 feet tall. For high-pressure applications, the vessel has thick, metal walls. Consequently, counter-current contactor vessels can be large and very heavy. This is generally undesirable, particularly for offshore oil and gas recovery applications, and may not be feasible for subsea applications.

The present technological advancement utilizes a co-current flow scheme as an alternative to the counter-current flow scheme demonstrated in the contactor **106** of **Fig. 1****.** The co-current flow scheme utilizes two or more co-current contacting systems connected in series within a pipe. A natural gas stream and a liquid solvent move together, i.e., co-currently, within the co-current contacting systems. The natural gas stream and the liquid solvent can move together generally along the longitudinal axis of the respective co-current contacting system. In general, co-current contactors can operate at much higher fluid velocities than counter-current contactors. As a result, co-current contactors tend to be smaller than counter-current contactors that utilize standard towers with packing or trays.

**Fig. 2** is a generalized block diagram of a subsea system **200** for dehydrating a natural gas stream that includes a co-current flow scheme. Like numbered items are as described with respect to **Fig. 1****.** The system **200** can be used with the gas dehydration system **100** described with respect to **Fig. 1****.**

The system **200** employs a number of co-current contacting systems (CCCSs) **202A-202C.** A wet natural gas stream **204** is flowed serially through the contactors, starting with co-current contacting system (CCCS) **202A,** proceeding through CCCS **202B,** and flowing through CCCS **202C.** A portion of the water in the wet natural gas stream **204** stream is removed in each contactor, resulting in a dry natural gas stream **206.**

As used herein, a dry natural gas is natural gas that contains less than about 50 parts per million by volume (ppmv) of residual water vapor, less than about 20 ppmv of residual water vapor, or less than about 5 ppmv of residual water vapor. The amount of residual water vapor can be controlled by the contact time, the lean solvent flow rate or purity, or, in the co-current contacting system described herein, by the number of co-current contactors used. Although three CCCSs **202A-202C** are shown in **Fig. 2****,** any number can be used, depending on the final dryness desired.

Each of the CCCSs **202A-202C** can be fed a portion of a lean solvent stream **118** from a regeneration system as described with respect to **Fig. 1****.** The lean solvent stream **118** can be divided into the portions and flowed in a parallel fashion through the CCCSs **202A-202C,** thus, providing lean solvent to each of the CCCSs **202A-202C.** After flowing through each of the CCCSs **202A-202C,** the solvent is recombined to form the rich solvent stream **136,** which is returned to the surface for processing.

In contrast, previous arrangements have flowed the lean solvent stream **118** into the final CCCS **202C** in the series, then flowed the partially lean solvent stream back to the next contactor, CCCS **202B** in this example, then flowed the partially rich stream from CCCS **202B** back to the first contactor, CCCS **202A** in this example. The resulting rich solvent stream was then regenerated. While this arrangement may have made more efficient use of the solvent, pumps may often be used on the solvent streams between the CCCSs **202A-202C** stages to boost the pressure. The inclusion of these pumps make the system more problematic for subsea implementation.

In **Fig. 2****,** a single contactor system **208** is shown, for example, using the regeneration system shown in **Fig. 1****.** The system **200** includes a second series of co-current contactors to remove the water from the rich solvent. The rich solvent stream **136** is flowed in through the contactors in place of the wet natural gas stream **204.** A dry stripping gas would take the place of the lean solvent stream **118** to remove the moisture. The regeneration takes place at a topsides facility, and thus, the dry stripping gas can be fed to the last contactor in the series, then fed backwards to previous contactors as described above. The system **200** can include any number of additional series of co-current contacting systems not shown in **Fig. 2****.**

### Co-Current Contacting System

**Fig. 3** is a schematic of a co-current contacting system (CCCS) **300.** The co-current contacting system **300** can provide for the separation of components within a gas stream. The co-current contacting system **300** of **Fig. 3** can be used for each of the CCCSs **202A-202C,** described with respect to **Fig. 2****.** The co-current contacting system **300** includes a co-current contactor **302** that is positioned in-line within a pipe **304.** The co-current contactor **302** includes a number of components that provide for the efficient contacting of a liquid droplet stream with a flowing gas stream **306.** The liquid droplet stream can be used for the separation of impurities, such as H₂O, H₂S, or CO₂, from a gas stream **306.**

The co-current contactor **302** can include a droplet generator **308** and a mass transfer section **310.** As shown in **Fig. 3****,** the gas stream **306** can be flowed through the pipe **304** and into the droplet generator **308.** A liquid stream **312** can also be flowed into the droplet generator **308,** for example, through a hollow space **314** coupled to flow channels **316** in the droplet generator **308.** The liquid stream **312** can include any type of treating liquid, e.g., solvent, that is capable of removing the impurities from the gas stream **306.** For example, the liquid stream **312** can be a lean solvent stream that includes a glycol selected to remove water from the gas stream **306.**

From the flow channels **316,** the liquid stream **312** is released into the gas stream **306** as fine droplets through injection orifices **318,** and is then flowed into the mass transfer section **310.** This can result in the generation of a treated gas stream **320** within the mass transfer section **310.** The treated gas stream **320** may include small liquid droplets dispersed in a gas phase. The liquid droplets may include impurities from the gas stream **306** that were absorbed or dissolved into the liquid stream **312.**

The treated gas stream **320** can be flowed from the mass transfer section **310** to a separation system **322,** such as a cyclonic separator, a mesh screen, or a settling vessel. For use in a subsea application, a simpler system may provide more reliability, and thus, a vane mist eliminator combined with a settling vessel can be used. Preferably, inline cyclonic separators can be used to realize the benefits of compactness and reduced diameter. The separation system **322** removes the liquid droplets from the gas phase. The liquid droplets may include the original liquid stream with the incorporated impurities **324,** and the gas phase may include a purified gas stream **326.** The purified gas stream **326** can be a gas stream that has been dehydrated.

As mentioned herein, the co-current contacting system **300** of **Fig. 3** may correspond to one of the CCCSs **202A-202C** shown in **Fig. 2****.** Accordingly, if the co-current contacting system **300** corresponds to CCCS **202A** then the gas stream **306** corresponds to the wet natural gas stream **204.** If the co-current contacting system 300 corresponds to CCCS **202C,** the purified gas stream **326** corresponds to the dry natural gas stream **206.**

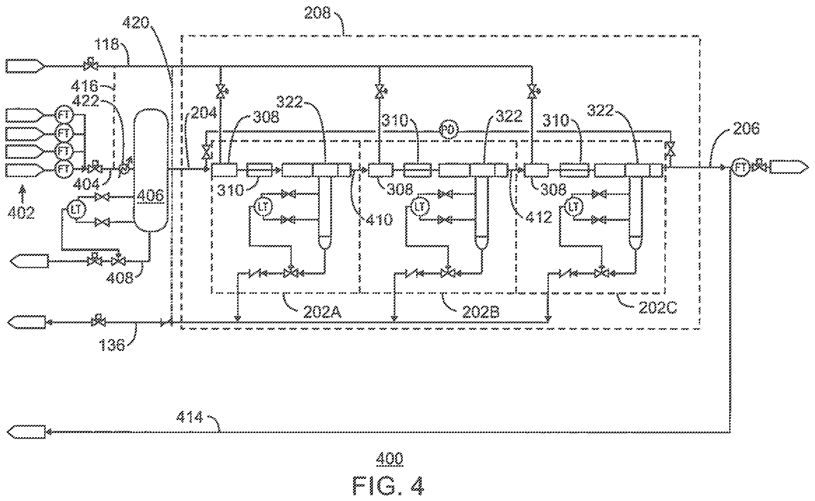

**Fig. 4** is a process flow diagram of a subsea separation system **400** including a number of co-current contacting systems (CCCSs) **202A-202C.** Like numbered items are as described with respect to **Figs. 1-3****.** The subsea separation system **400** can be analogous to the contactor **106,** for example, as described with respect to **Fig. 1****,** in which each of the CCCSs **202A-202C** are acting as bed packing. The subsea separation system **400** can be implemented as part of the subsea system **200** described with respect to **Fig. 2****.** In the illustrative arrangement shown in **Fig. 4****,** a first CCCS **202A,** a second CCCS **202B,** and a third CCCS **202C** are provided. As described herein, the number of CCCSs **202A-202C** can be increased or decreased depending on the amount of water in the natural gas stream, the flow rate of the gas stream through the contactors **202A-202C** and other factors.

The subsea separation system **400** can be placed on a seafloor, for example, in proximity to a number of gas wells to allow the feed gas **402** from the gas wells to be combined for processing. The combined feed gas **404** can be fed to a separator **406.** In the separator **406** water, sand, and other liquid and solid impurities may settle out. A waste line **408** can be used to transport these to the topsides facility for processing.

From the separator **406,** a wet natural gas stream **204** can be flowed into the first CCCS **202A.** The first CCCS **202A** may generate a first partially purified gas stream **410,** which can be flowed from the first CCCS **202A** to the second CCCS **202B.** The second CCCS **202B** may then generate a second partially purified gas stream **412,** which can be flowed from the second CCCS **202B** to the third CCCS **202C.** The third CCCS **202C** can generate the dry natural gas stream **206,** which can be transported to a shore or topsides facility for further processing or sale.

Each of the first, second, and third CCCSs **202A-202C** are fed lean solvent from the lean solvent stream **118** from the topsides facility. The rich solvent from each of the CCCSs **202A-202C** is combined, and the combined stream, rich solvent stream **136,** is returned to the surface for regeneration by water removal. The operating pressure of the absorption is typically much higher than the regeneration system, and this pressure can be used to drive the flow of the rich solvent stream **136** to the regeneration system, for example, as described with respect to **Fig. 1****.**

A separate dry gas stream **414** is shown in **Fig. 4****.** The dry gas stream **414** can be used to provide a stripping gas stream **177,** described with respect to **Fig. 1** to enhance the regeneration of the solvent. Further, a portion of the dry gas from the dry gas stream **414** can be used as fuel, for example, to power a generator at the surface, provide heat, or both.

Other lines and units can be used to provide further functionality in subsea applications. For example, a lean solvent flush line **416** can be used to provide lean solvent upstream of the separator **406.** This can be used to flush the upstream lines and the separator, for example, in case of hydrate formation. Further, a bypass line **420** can be used to couple the lean solvent stream **118** to the rich solvent stream **136.** The bypass line **420** may allow the solvent to be flowed through the lines to the subsea separation system **400** during period when the wells are blocked in, keeping the lines from cooling, for example, to keep the viscosity of the solvent from increasing and making system startup and restarts easier. The bypass line **420** can be located before the first CCCS **202A,** as shown, or can be located after the last CCCS **202C.** Further, the system may have multiple bypass lines, for example, around each of the CCCSs **202A-202C.** In addition to, or instead of bypass lines, the solvent flow can be continued through the CCCSs **202A-202C** when the natural gas flow is shut-in, protecting the CCCSs **202A-202C** from hydrate formation. As natural gas from wells can be hot, e.g., 70 °C or higher, a heat exchanger **422** can be used to exchange heat from the combined feed gas **404** with seawater to lower the temperature before the dehydration process, e.g., to 25 °C or lower. The heat exchanger **422** can be placed upstream of the separator **406,** so that any condensed water is removed in the separator **406,** although the heat exchanger **422** can be placed in any location prior to the dehydration. Further, the heat exchanger **422** can be placed after the lean solvent flush line **416,** so that any hydrates that formed can be removed.

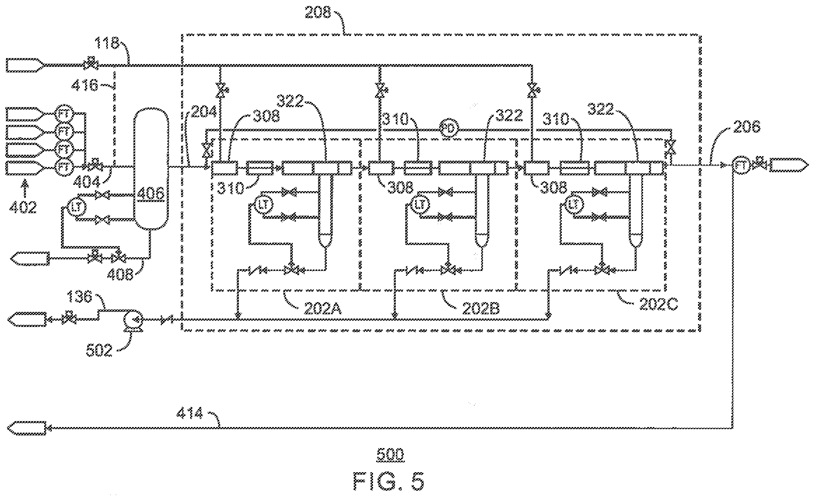

**Fig. 5** is a process flow diagram of a subsea separation system **500** including a rich solvent return pump **502** on the rich solvent stream **136.** Like numbered items are as described with respect to **Figs. 1-4****.** Depending on the depth of the subsea separation system **500,** the pressure differential may not be sufficiently high to overcome the vertical column of the rich solvent stream **136.** Accordingly, the rich solvent stream **136** can be pumped back to the topsides facility. The rich solvent return pump **502** can be driven by electric power, or can be hydraulically powered, for example, using a turbine and the pressure of another stream, such as the lean solvent stream **118** or the natural gas flow, upstream or downstream of the subsea separation system **500.**

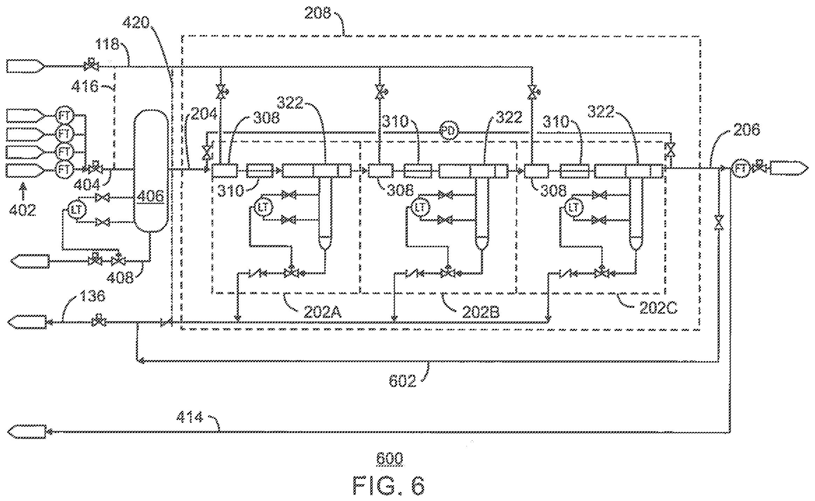

**Fig. 6** is a process flow diagram of a subsea separation system **600** including a lift gas stream **602.** Like numbered items are as described with respect to **Figs. 1-4****.** Depending on the depth of the subsea separation system **600,** the pressure differential may not be sufficiently high to overcome the vertical column of the rich solvent stream **136.** As shown in **Fig. 6****,** a lift gas stream **602** can be used to assist in the return of the rich solvent stream **136.** The lift gas stream **602** can be a slip stream of the dry natural gas stream **206,** which is combined into the rich solvent stream **136** to reduce the effective density of the rich solvent stream **136** and enable upward flow. During a startup, a lift gas stream **602** can be provided from the topsides facility. The lift gas provided from the surface can be a dry natural gas stream, or can be an inert gas stream, such as a nitrogen stream. Further, natural gas from a shut-in well can be used as the lift gas stream **602** during startup. This can be natural gas from a well that does not need substantial dehydration, but this may not be necessary, as the solvent will function to inhibit any hydrate formation.

If lift gas is used in the rich solvent return, the lift gas may also be used as fuel to run equipment on the topsides facility. When the gas-solvent mixture reaches the topsides facility, the pressure of the gas-solvent mixture is reduced and the mixture is flashed in a separator vessel, such as the inlet separator **110** or flash drum **154** described with respect to **Fig. 1****.** The flash gas may then dried in a small contactor, such as counter current contactor **106,** before being routed to the fuel gas system or being used as stripping gas. Depending on the fuel gas requirements of the topsides facility, the lift gas may supply part or all of the fuel needed. The rich solvent stream **136** leaving the flash vessel can be regenerated using a stripper tower and reboiler to produce the lean solvent stream **118** as shown in **Fig. 1****.** As in the previous figures, a separate dry gas line **414** can be used to provide supplemental fuel gas or stripping gas to enhance regeneration of the solvent.

It is to be understood that the subsea separation system is not limited to the number of co-current contacting systems shown in **Figs. 4-6****.** Rather, the separation system may include any suitable number of co-current contacting systems, depending on the details of the specific implementation. Further, the interconnections within the subsea separation system do not have to be arranged as shown in **Figs. 4-6****.** Rather, any suitable variations or alternatives to the interconnections shown in **Figs. 4-6** can be present within the separation system, depending on the details of the specific implementation. In addition, any combinations of the lines and equipment shown in **Figs. 4-6** can be made. For example, the bypass line **420** or heat exchanger **422,** shown in **Fig. 4****,** can be used in the implementations shown in **Figs. 5** and **6****,** among others.

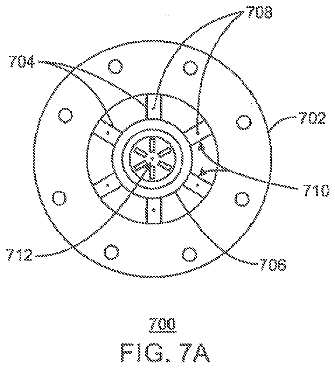

**Fig. 7A** is a front view of a contacting device **700.** The contacting device **700** is implemented within a co-current contactor, for example, in the co-current contactor **302** described with respect to the co-current contacting system **300** of **Fig. 3****.** The contacting device **700** is an axial, in-line co-current contactor located within a pipe. The front view of the contacting device **700** represents an upstream view of the contacting device **700.**

The contacting device **700** comprises an outer annular support ring **702,** a number of radial blades **704** extending from the annular support ring **702,** and a central gas entry cone **706.** The annular support ring **702** secures the contacting device **700** in-line within the pipe. In addition, the radial blades **704** may provide support for the central gas entry cone **706.**

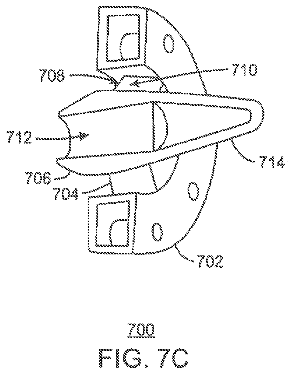

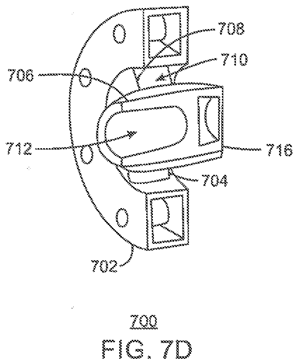

The annular support ring **702** can be designed as a flanged connection, or as a removable or fixed sleeve inside the pipe. In addition, the annular support ring **702** may include a liquid feed system and a hollow channel described further with respect to **Figs. 7C** and **7D****.** A liquid stream can be fed to the contacting device **700** via the hollow channel in the annular support ring **702.** The hollow channel may allow equal distribution of the liquid stream along the perimeter of the contacting device **700.**

Small liquid channels within the annular support ring **702** may provide a flow path for the liquid stream to flow through liquid injection orifices **708** within the radial blades **704.** The liquid injection orifices **708** can be located on or near the leading edge of each radial blade **704.** Placement of the liquid injection orifices **708** on the radial blades **704** may allow the liquid stream to be uniformly distributed in a gas stream that is directed between the radial blades **704.** Specifically, the liquid stream can be contacted by the gas stream flowing through the gaps between the radial blades **704,** and can be sheared into small droplets and entrained in the gas phase.

The gas stream may also be flowed into the central gas entry cone **706** through a gas inlet **712.** The central gas entry cone **706** may block a cross-sectional portion of the pipe. The radial blades **704** include gas exit slots **710** that allow the gas stream to be flowed out of the central gas entry cone **706.** This may increase the velocity of the gas stream as it flows through the pipe. The central gas entry cone **706** may direct a predetermined amount of the gas stream to the gas exit slots **710** on the radial blades **704.**

Some of the liquid stream injected through the radial blades **704** can be deposited on the surface of the radial blades **704** as a liquid film. As the gas stream flows through the central gas entry cone **706** and is directed out of the gas exit slots **710** on the radial blades **704,** the gas stream may sweep, or blow, much of the liquid film off the radial blades **704.** This may enhance the dispersion of the liquid stream into the gas phase. Further, the obstruction to the flow of the gas stream and the shear edges created by the central gas entry cone **706** may provide a zone with an increased turbulent dissipation rate. The may result in the generation of smaller droplets that enhance the mass transfer rate of the liquid stream and the gas stream.

The size of the contacting device **700** can be adjusted such that the gas stream flows at a high velocity. This can be accomplished via either a sudden reduction in the diameter of the annular support ring **702** or a gradual reduction in the diameter of the annular support ring **702.** The outer wall of the contacting device **700** can be slightly converging in shape, terminating at the point where the gas stream and the liquid stream are discharged into the downstream pipe. This can allow for the shearing and re-entrainment of any liquid film that is removed from the contacting device **700.** Further, a radial inward ring, grooved surface, or other suitable equipment can be included on the outer diameter of the contacting device **700** near the point where the gas stream and the liquid stream are discharged into the downstream pipe. This can enhance the degree of liquid entrainment within the gas phase.

The downstream end of the contacting device **700** may discharge into a section of pipe (not shown). The section of pipe can be a straight section of pipe, or a concentric expansion section of pipe. The central gas entry cone **706** can terminate with a blunt ended cone or a tapered ended cone. In other embodiments, the central gas entry cone **706** can terminate with a ridged cone, which can include multiple concentric ridges along the cone that provide multiple locations for droplet generation. In addition, any number of gas exit slots **710** can be provided on the cone itself to allow for the removal of the liquid film from the contacting device **700.**

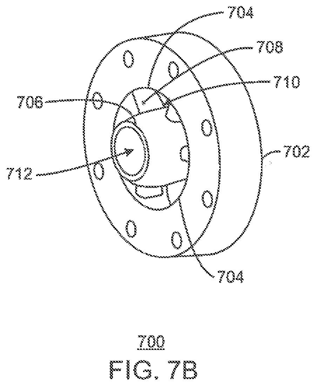

**Fig. 7B** is a side perspective view of the contacting device **700.** Like numbered items are as described with respect to **Fig. 7A****.** As shown in **Fig. 7B****,** the upstream portion of the central gas entry cone **706** can extend further into the pipe than the annular support ring **702** and the radial blades **704** in the upstream direction. The downstream portion of the central gas entry cone **706** can also extend further into the pipe than the annular support ring **702** and the radial blades **704** in the downstream direction. The length of the central gas entry cone **706** in the downstream direction depends on the type of cone at the end of the central gas entry cone **706,** as described further with respect to **Figs. 7C** and **7D****.**

**Fig. 7C** is a cross-sectional side perspective view of the contacting device **700.** Like numbered items are as described with respect to **Figs. 7A** and **7B****.** According to **Fig. 7C****,** the central gas entry cone **706** of the contacting device **700** terminates with a tapered ended cone **714.** Terminating the central gas entry cone **706** with a tapered ended cone **714** may reduce the overall pressure drop in the pipe caused by the contacting device **700.**

**Fig. 7D** is another cross-sectional side perspective view of the contacting device **700.** Like numbered items are as described with respect to **Figs. 7A-C****.** According to **Fig. 7D****,** the central gas entry cone **706** of the contacting device **700** terminates with a blunt ended cone **716.** Terminating the central gas entry cone **706** with a blunt ended cone **716** may encourage droplet formation in the center of the pipe.

### Method for Dehydrating a Natural Gas Stream (not part of the invention and for illustration purposes only)

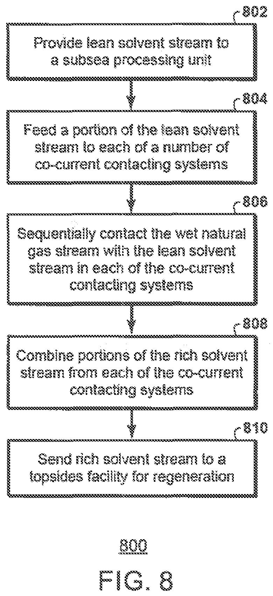

**Fig. 8** is a process flow diagram of a method **800** for subsea dehydration of a natural gas stream using co-current contacting systems. The method **800** can be implemented by the series of co-current contacting systems **202A-202C** described with respect to the system **200 of** **Figs. 2****,** **4****,** **5****,** and **6****.**

The method **800** begins at block **802** when a lean solvent stream is provided to a subsea processing unit. At block **804** a portion of the lean solvent stream is fed to each of a number of co-current contacting systems in the subsea processing unit.

At block **806,** a wet natural gas stream is sequentially contacted with the lean solvent stream in each of the co-current contacting systems to generate a natural gas stream that is at least partially dehydrated and a portion of a rich solvent stream comprising water. At block **808,** the portions of the rich solvent stream from each of the co-current contacting systems are combined to form the rich solvent stream. At block **810,** the rich solvent stream is sent to a topsides facility for regeneration. This can be performed using an inherent pressure differential, a pump, or a lift gas system.

The dry natural gas stream can be sent to an on-shore facility for further processing, for example, CO₂ and H₂S can be removed from the dry natural gas stream in the on-shore facility. At least a portion the dehydrated natural gas stream can be sent to a processing system located in the topsides facility.

The process flow diagram of **Fig. 8** is not intended to indicate that the blocks of the method **800** are to be executed in any particular order, or that all of the blocks of the method **800** are to be included in every case. Further, any number of additional blocks not shown in **Fig. 8** can be included within the method **800,** depending on the details of the specific implementation.

The methods, processes, and/or functions described herein can be implemented and/or controlled by a computer system appropriately programmed.

Moreover, it is contemplated that features from various examples described herein can be combined together, including some but not necessarily all the features provided for given examples. Furthermore, the features of any particular example are not necessarily required to implement the present technological advancement.

While the present techniques can be susceptible to various modifications and alternative forms, the examples described above are non-limiting. It should again be understood that the techniques is not intended to be limited to the particular embodiments disclosed herein.

## Claims

1. A system (100) for dehydrating a wet natural gas stream (102; 112; 204; 306), comprising:
a topsides facility and a subsea dehydration system (200; 400; 500; 600);
a lean solvent line to provide a lean solvent stream (118) to the subsea dehydration system (200; 400; 500; 600);
the subsea dehydration system (200; 400; 500; 600) comprising a first plurality of co-current contacting systems (202A-202C; 300) coupled in series along a wet natural gas stream (102; 112; 204), wherein each co-current contacting system (202A-202C; 300) is configured to contact the wet natural gas stream (102; 112; 204; 306) with a portion of the lean solvent stream (118) to generate a natural gas stream that is at least partially dehydrated (104; 206; 326; 410; 412) and a rich solvent stream comprising the water (136);
a rich solvent line configured to combine the rich solvent streams (136) into a single rich solvent stream and return the single rich solvent stream to the topsides facility; and
a regeneration system (144) at the topsides facility, the regeneration system (144) comprising a second series of co-current contacting systems (202A-202C; 300) coupled in series and configured to contact the rich solvent stream (136) with a stripping gas (177) to regenerate the rich solvent stream (136) thereby forming the lean solvent stream (118) and a waste gas stream comprising the water and the stripping gas (177);
wherein each of the first plurality of co-current contacting systems (202A-202C; 300) comprises:
a co-current contactor (302) located in-line within a pipe (304), the co-current contactor (302) comprising:
a contacting device (700), comprising:
an annular support ring (702) configured to maintain the contacting device (700) within the pipe (304);
a plurality of radial blades (704) configured to allow a liquid stream (312) to flow into the contacting device (700); and
a central gas entry cone (706) configured to allow a gas stream (306) to flow through a hollow section within the contacting device (700); and
a mass transfer section (310) downstream of the contacting device (700);
wherein the contacting device (700) and the mass transfer section (310) provide for efficient incorporation of liquid droplets formed from the liquid stream (312) into the gas stream (306); and
a separation system (322) configured to remove the liquid droplets from the gas stream (306).

2. The system (100) of claim 1, wherein the stripping gas (177) comprises a dry natural gas stream (206) from the subsea separation system (200; 400; 500; 600).

3. The system (100) of claim 1, wherein the separation system (322) comprises a cyclonic separator.

4. The system (100) of claim 1, wherein a downstream portion of the central gas entry cone (706) comprises a blunt ended cone (716) or a tapered ended cone (714).

5. The system (100) of claim 1, comprising a lift gas line configured to remove a lift gas stream (602) from the dry natural gas stream (206) from the subsea system (200; 400; 500; 600) to assist a flow of the rich solvent stream (136) to the topsides facility.

6. The system (100) of claim 5, comprising:
a separation vessel to separate a lift gas stream (602) from the rich solvent stream (136); and
a generator powered by combusting the lift gas stream (602).

7. The system (100) of any of claims 1-6, comprising a dry gas line configured to remove a portion of the dry natural gas stream (206) to the topsides facility.

8. The system (100) of any of claims 1-7, wherein the solvent regeneration system is located on a surface vessel of the topsides facility.

9. The system (100) of any of claims 1-8, comprising a lean solvent flush line (416) upstream of a separator (406) configured to allow a lean solvent flush to the separator (406) to prevent or remove hydrates.

10. The system (100) of any of claims 1-9, comprising a bypass line (420) from the lean solvent stream (118) to the rich solvent stream (136) configured to allow solvent circulation to be maintained when the subsea separation system (200; 400; 500; 600) is shut down, the system (100) further comprising a plurality of bypass lines (420) each proximate to one of the plurality of co-current contacting systems (202A-202C; 300) and each configured to allow solvent circulation to be maintained when the subsea separation system (200; 400; 500; 600) is shut down.

## Patentansprüche

1. System (100) zum Entwässern eines feuchten Erdgasstroms (102; 112; 204; 306), umfassend:
eine Oberflächenanlage und ein Unterwasser-Entwässerungssystem (200; 400; 500; 600);
eine Leitung für mageres Lösungsmittel, um einen mageren Lösungsmittelstrom (118) zum Unterwasser-Entwässerungssystem (200; 400; 500; 600) zu liefern;
wobei das Unterwasser-Entwässerungssystem (200; 400; 500; 600) eine erste Vielzahl von Gleichstrom-Kontaktsystemen (202A-202C; 300) umfasst, die entlang eines feuchten Erdgasstroms (102; 112; 204) in Reihe geschaltet sind, wobei jedes Gleichstrom-Kontaktsystem (202A-202C; 300) so konfiguriert ist, dass es den feuchten Erdgasstrom (102; 112; 204; 306) mit einem Teil des mageren Lösungsmittelstroms (118) in Kontakt bringt, um einen Erdgasstrom zu erzeugen, der zumindest teilweise entwässert ist (104; 206; 326; 410; 412) und einen reichen Lösungsmittelstrom zu erzeugen, der das Wasser (136) umfasst;
eine Leitung für reiches Lösungsmittel, die so konfiguriert ist, dass sie die reichen Lösungsmittelströme (136) zu einem einzigen reichen Lösungsmittelstrom kombiniert und den einzigen reichen Lösungsmittelstrom zur Oberflächenanlage zurückführt; und
ein Regenerierungssystem (144) in der Oberflächenanlage, wobei das Regenerierungssystem (144) eine zweite Reihe von Gleichstrom-Kontaktsystemen (202A-202C; 300) umfasst, die in Reihe geschaltet und so konfiguriert sind, dass sie den reichen Lösungsmittelstrom (136) mit einem Strippgas (177) in Kontakt bringen, um den reichen Lösungsmittelstrom (136) zu regenerieren, wodurch der magere Lösungsmittelstrom (118) und ein Abgasstrom gebildet werden, der das Wasser und das Strippgas (177) umfasst;
wobei jedes der ersten mehreren Gleichstrom-Kontaktsysteme (202A-202C; 300) umfasst:
einen Gleichstromkontaktor (302), der in Linien und innerhalb eines Rohrs (304) angeordnet ist, wobei der Gleichstromkontaktor (302) umfasst:
eine Kontaktvorrichtung (700), die umfasst:
einen ringförmigen Stützring (702), der so konfiguriert ist, dass er die Kontaktvorrichtung (700) innerhalb des Rohrs (304) hält;
eine Vielzahl von radialen Flügeln (704), die so konfiguriert sind, dass sie einen Flüssigkeitsstrom (312) in die Kontaktvorrichtung (700) fließen lassen; und
einen zentralen Gaseintrittskonus (706), der so konfiguriert ist, dass ein Gasstrom (306) durch einen hohlen Abschnitt innerhalb der Kontaktvorrichtung (700) strömen kann; und
einen Stoffaustauschabschnitt (310) stromabwärts der Kontaktvorrichtung (700);
wobei die Kontaktvorrichtung (700) und der Stoffaustauschabschnitt (310) für eine effiziente Aufnahme von aus dem Flüssigkeitsstrom (312) gebildeten Flüssigkeitströpfchen in den Gasstrom (306) sorgen; und
ein Trennsystem (322), das so konfiguriert ist, dass es die Flüssigkeitströpfchen aus dem Gasstrom (306) entfernt.

2. System (100) nach Anspruch 1, wobei das Strippgas (177) einen trockenen Erdgasstrom (206) aus dem Unterwasser-Trennsystem (200; 400; 500; 600) umfasst.

3. System (100) nach Anspruch 1, wobei das Trennsystem (322) einen Zyklonabscheider umfasst.

4. System (100) nach Anspruch 1, wobei ein stromabwärtiger Abschnitt des zentralen Gaseintrittskonus (706) einen stumpfen Konus (716) oder einen sich verjüngenden Konus (714) umfasst.

5. System (100) nach Anspruch 1, umfassend eine Hebegasleitung, die so konfiguriert ist, dass sie einen Hebegasstrom (602) aus dem trockenen Erdgasstrom (206) aus dem Unterwassersystem (200; 400; 500; 600) entfernt, um einen Fluss des reichen Lösungsmittelstroms (136) zur Oberflächenanlage zu unterstützen.

6. System (100) nach Anspruch 5, umfassend:
einen Trennbehälter zum Trennen eines Hebegasstroms (602) vom reichen Lösungsmittelstrom (136); und
einen Generator, der durch Verbrennen des Hebegasstroms (602) angetrieben wird.

7. System (100) nach einem der Ansprüche 1 bis 6, umfassend eine Trockengasleitung, die so konfiguriert ist, dass sie einen Teil des trockenen Erdgasstroms (206) zur Oberflächenanlage abführt.

8. System (100) nach einem der Ansprüche 1 bis 7, wobei sich das Lösungsmittel-Regenerierungssystem auf einem Überwasserschiff der Oberflächenanlage befindet.

9. System (100) nach einem der Ansprüche 1 bis 8, umfassend eine Spülleitung (416) für mageres Lösungsmittel stromaufwärts eines Separators (406), die so konfiguriert ist, dass sie eine Spülung des Separators (406) mit magerem Lösungsmittel ermöglicht, um Hydrate zu verhindern oder zu entfernen.

10. System (100) nach einem der Ansprüche 1 bis 9, umfassend eine Bypassleitung (420) vom mageren Lösungsmittelstrom (118) zum reichen Lösungsmittelstrom (136), die so konfiguriert ist, dass die Lösungsmittelzirkulation aufrechterhalten werden kann, wenn das Unterwasser-Trennsystem (200; 400; 500; 600) abgeschaltet ist, wobei das System (100) ferner eine Vielzahl von Bypassleitungen (420) umfasst, die sich jeweils in der Nähe eines der Vielzahl von Gleichstrom-Kontaktsystemen (202A-202C; 300) befinden und jeweils so konfiguriert sind, dass die Lösungsmittelzirkulation aufrechterhalten werden kann, wenn das Unterwasser-Trennsystem (200; 400; 500; 600) abgeschaltet ist.

## Revendications

1. Système (100) destiné à déshydrater un courant de gaz naturel humide (102 ; 112 ; 204 ; 306), comprenant :
une installation de surface et un système de déshydratation sous-marin (200 ; 400 ; 500 ; 600) ;
une conduite de solvant pauvre pour fournir un courant de solvant pauvre (118) au système de déshydratation sous-marin (200 ; 400 ; 500 ; 600) ;
le système de déshydratation sous-marin (200 ; 400 ; 500 ; 600) comprenant une première pluralité de systèmes de mise en contact à cocourant (202A-202C ; 300) couplés en série le long d'un courant de gaz naturel humide (102 ; 112 ; 204), chaque système de mise en contact à cocourant (202A-202C ; 300) étant conçu pour mettre le courant de gaz naturel humide (102 ; 112 ; 204 ; 306) en contact avec une partie du courant de solvant pauvre (118) afin de générer un courant de gaz naturel qui est au moins partiellement déshydraté (104 ; 206 ; 326 ; 410 ; 412) et un courant de solvant riche comprenant l'eau (136) ; une conduite de solvant riche conçue pour combiner les courants de solvant riche (136) en un courant de solvant riche unique et renvoyer l'unique courant de solvant riche à l'installation de surface ; et
un système de régénération (144) au niveau de l'installation de surface, le système de régénération (144) comprenant une deuxième série de systèmes de mise en contact à cocourant (202A-202C ; 300) couplés en série et conçus pour mettre le courant de solvant riche (136) en contact avec un gaz d'extraction (177) afin de régénérer le courant de solvant riche (136), ce qui permet de former le courant de solvant pauvre (118) et un courant de gaz résiduaire comprenant l'eau et le gaz d'extraction (177) ;
chaque système de la première pluralité de systèmes de mise en contact à cocourant (202A-202C ; 300) comprenant :
un contacteur à cocourant (302) situé en ligne à l'intérieur d'une canalisation (304), le contacteur à cocourant (302) comprenant :
un dispositif de mise en contact (700), comprenant :
une bague de support annulaire (702) conçue pour maintenir le dispositif de mise en contact (700) à l'intérieur de la canalisation (304) ;
une pluralité d'ailettes radiales (704) conçues pour faire circuler un courant liquide (312) à l'intérieur du dispositif de mise en contact (700) ; et
un cône central d'entrée de gaz (706) conçu pour faire circuler un courant gazeux (306) à travers une section creuse à l'intérieur du dispositif de mise en contact (700) ; et
une section de transfert de masse (310) en aval du dispositif de mise en contact (700) ;
le dispositif de mise en contact (700) et la section de transfert de masse (310) permettant l'incorporation efficace de gouttelettes liquides formées à partir du courant liquide (312) dans le courant gazeux (306) ; et
un système de séparation (322) conçu pour retirer les gouttelettes liquides du courant gazeux (306).

2. Système (100) de la revendication 1, dans lequel le gaz d'extraction (177) comprend un courant de gaz naturel sec (206) provenant du système de séparation sous-marin (200 ; 400 ; 500 ; 600).

3. Système (100) de la revendication 1, dans lequel le système de séparation (322) comprend un séparateur cyclonique.

4. Système (100) de la revendication 1, dans lequel une partie aval du cône central d'entrée de gaz (706) comprend un cône à extrémité plate (716) ou un cône à extrémité effilée (714).

5. Système (100) de la revendication 1, comprenant une conduite de gaz de remontée conçue pour retirer un courant de gaz de remontée (602) du courant de gaz naturel sec (206) provenant du système sous-marin (200 ; 400 ; 500 ; 600) afin de faciliter la circulation du courant de solvant riche (136) jusqu'à l'installation de surface.

6. Système (100) de la revendication 5, comprenant :
une cuve de séparation pour séparer un courant de gaz de remontée (602) du courant de solvant riche (136) ; et
un générateur alimenté par combustion du courant de gaz de remontée (602).

7. Système (100) de l'une quelconque des revendications 1 à 6, comprenant une conduite de gaz sec conçue pour retirer une partie du courant de gaz naturel sec (206) vers l'installation de surface.

8. Système (100) de l'une quelconque des revendications 1 à 7, dans lequel le système de régénération de solvant se situe sur une cuve de surface de l'installation de surface.

9. Système (100) de l'une quelconque des revendications 1 à 8, comprenant une conduite de rinçage au solvant pauvre (416) en amont d'un séparateur (406) conçu pour permettre un rinçage au solvant pauvre vers le séparateur (406) afin de bloquer ou de retirer les hydrates.

10. Système (100) de l'une quelconque des revendications 1 à 9, comprenant une conduite de dérivation (420) allant du courant de solvant pauvre (118) au courant de solvant riche (136) conçue pour permettre le maintien de la circulation de solvant lorsque le système de séparation sous-marin (200 ; 400 ; 500 ; 600) est arrêté, le système (100) comprenant en outre une pluralité de conduites de dérivation (420), chacune à proximité d'un système de la pluralité de systèmes de mise en contact à cocourant (202A-202C ; 300) et chacune conçue pour permettre le maintien de la circulation de solvant lorsque le système de séparation sous-marin (200 ; 400 ; 500 ; 600) est arrêté.
